# EUROPEAN PATENT SPECIFICATION

(11) **EP 1 762 888 B1**
(45) Date of publication and mention of the grant of the patent: **08.06.2011**
(21) Application number: 05755264.8
(22) Date of filing: 29.06.2005
(51) Int. Cl.: G02F 1/13, G09F 9/00, H04M 1/02

(54) **LIQUID CRYSTAL DISPLAY**
FLÜSSIGKRISTALLANZEIGE
AFFICHAGE À CRISTAUX LIQUIDES

(30) Priority: 29.06.2004 JP 2004191640; 29.11.2004 JP 2004343557; 02.02.2005 JP 2005026686; 07.03.2005 JP 2005062429
(43) Date of publication of application: 14.03.2007
(73) Proprietor: Panasonic Corporation, Kadoma-shi Osaka 571-8501 (JP)
(72) Inventor: SUZUKI, Shouji c/o Matsushita El. Ind. Co.,Ltd., Osaka-shi, Osaka 540-6319 (JP); TATEHANA, Masami c/o Matsushita El. Ind. Co.,Ltd., Osaka-shi, Osaka 540-6319 (JP); KOUNO, Kazunori c/o Matsushita El. Ind. Co.,Ltd., Osaka-shi, Osaka 540-6319 (JP); KUBO, Tetsuya c/o Matsushita El. Ind. Co.,Ltd., Osaka-shi, Osaka 540-6319 (JP); NAKAMURA, Shinya c/o Matsushita El. Ind. Co.,Ltd., Osaka-shi, Osaka 540-6319 (JP); OOHIRA, Akinori c/o Matsushita El. Ind. Co.,Ltd., Osaka-shi, Osaka 540-6319 (JP); NISHIMURA, Eiji c/o Matsushita El. Ind. Co.,Ltd., Osaka-shi, Osaka 540-6319 (JP); KONDOU, Yasunori c/o Matsushita El. Ind. Co.,Ltd., Osaka-shi, Osaka 540-6319 (JP); MASAMOTO, Toru c/o Matsushita El. Ind. Co.,Ltd., Osaka-shi, Osaka 540-6319 (JP); ABE, Tsutomu c/o Matsushita El. Ind. Co.,Ltd., Osaka-shi, Osaka 540-6319 (JP)
(74) Representative: Grünecker, Kinkeldey, Stockmair & Schwanhäusser Anwaltssozietät
(86) International application number: PCT/JP2005/011983
(87) International publication number: WO 2006/001483

(56) References cited:
- EP-A- 1 001 303
- EP-A2- 1 231 757
- JP-A- 7 302 634
- JP-A- 9 014 611
- JP-A- 9 127 541
- JP-A- 10 115 835
- JP-A- 2000 147 545
- JP-A- 2002 372 922
- JP-A- 2002 372 922
- JP-A- 2003 330 001
- US-A1- 2002 131 141

## Description

### <TECHNICAL FIELD>

The present invention relates to a liquid crystal display and to a liquid crystal display which can be used in a portable terminal, for example.

### <BACKGROUND ART>

EP 1 001 303 A discloses a liquid crystal display having the features as defined in the preamble of claim 1. Particularly, said document discloses a display unit attachment connecting device 100 as shown in Fig. 24 as a structure for attaching a liquid crystal display.

The display unit attachment connecting device 100 comprises a liquid crystal display unit 101, a flexible board 102 connected to the liquid crystal display unit 101, a holding member 103 for holding the liquid crystal display unit 101, a printed board 104 to which the holding member 103 is attached, and a spring member 105 mounted on the printed board 104 and obtained by molding a plurality of conductive springs with a resin. The liquid crystal display unit 101 is attached to the holding member 103 through a light guide plate 106. Moreover, the flexible board 12 is folded back on the outside of the holding member 103, and furthermore, is energized by the spring member 105 so that the printed board 104 and the flexible board 12 are electrically connected to each other.

US 2002/131141 A1 discloses a liquid crystal display having a housing and an almost plate-shaped liquid crystal display panel. Said liquid crystal display panel is disposed on the backside of the housing so as to be exposed from an opening provided in the housing. Parts of said opening are defined by wall portions having an insertion hole capable of inserting a flexible board connected to the liquid crystal display panel thereto.

JP 2002-372922 A relates to a liquid crystal display having a housing provided for accommodating a liquid crystal display panel connected to a flexible board. Said housing is comprised of several wall portions defining a rectangular opening for receiving said liquid crystal display panel, wherein at one side of the opening, the wall portion has an insertion hole capable of inserting the flexible board therethrough. Said housing further comprises two protrusions disposed substantially at the end side in the width direction of said insertion hole. Said protrusions basically have a conical shape and are received by a purchase formed in the flexible board at respective positions.

JP 2003-330001 A refers to a liquid crystal device comprising a housing for receiving a liquid crystal display panel connected to a flexible board. Said housing having a monocoque shape with wall portions forming substantially an U-shaped recess and defining an opening for accommodating a liquid crystal display panel. The open end of the U-shaped recess receives the flexible board.

### <DISCLOSURE OF THE INVENTION>

### <PROBLEMS TO BE SOLVED>

In the display unit attachment connecting device 100, however, the liquid crystal display unit 101 is attached to a housing (not shown) through the holding member 103. Therefore, there is a problem in that the number of components is increased, and furthermore, the number of steps of attaching the holding member 103 is increased in an assembly.

The invention has been made to solve the conventional problems, specifically to solve the problem of stress distribution in the housing and has an object to provide a liquid crystal display capable of decreasing a number of components, being easily assembled and having a housing with reduced stress distribution.

### <MEANS FOR SOLVING THE PROBLEMS>

The above object is solved by a liquid crystal display having the features as defined in claim 1.

In the following description, the open void (12) recited in claim 1 is denoted by the term "opening".

By the structure, when the liquid crystal display panel is to be attached to the opening of the housing, it is supported and attached to the housing by the plate portion provided in parallel with the opening through the wall portion at the back side of the housing. In this case, the flexible board drawn from the end face of the liquid crystal body is led out of the insertion hole provided on the wall portion. For this reason, it is not necessary to provide a holding member in the attachment of the liquid crystal display panel to the housing as in the conventional art. Consequently, it is possible to decrease the number of components and to reduce an attachment man-hour of the holding member.

Moreover, the liquid crystal display according to the invention has such a structure that a support column for transversely partitioning the insertion hole is provided.

By the structure, the opened insertion hole is partitioned through the support column to reduce a span length. Therefore, it is possible to increase a strength of the housing in the opening portion.

Furthermore, the liquid crystal display according to a preferred embodiment of the invention has such a structure that a rib is provided along the insertion hole on a side end of the insertion hole of the plate portion.

By the structure, it is possible to maintain a strength and to suppress a flexure on the side end of the insertion hole of the plate portion.

In addition, the liquid crystal display according to a further preferred embodiment of the invention has such a structure that a positioning boss corresponding to a positioning hole disposed on the flexible board is provided on a back face of the plate portion.

By the structure, the flexible board led out of the insertion hole provided on the wall portion of the housing is folded back toward the back face of the plate portion and is fitted in the positioning boss having the positioning hole of the flexible board provided on the back face of the plate portion, and is thus positioned and fixed. Consequently, it is possible to prevent a runout of the flexible board. Therefore, it is possible to decrease a load acting on the attaching portion of the flexible board and the connector which is easily broken due to a concentration of the load.

### <ADVANTAGE OF THE INVENTION>

The invention can provide a liquid crystal display having an advantage that a plate portion is provided in parallel with an opening through a wall portion on a back side of a housing and an insertion hole for leading out a flexible board drawn from an end face of a liquid crystal display panel is provided on the wall portion so that the number of components can be decreased and an attachment man-hour of a holding member can be reduced.

Further advantages of the present invention will derive in view of the preferred embodiment described in the following.

### <BRIEF DESCRIPTION OF THE DRAWINGS>

Fig. 1 is a perspective view showing a main part of a liquid crystal display according to a first example, which is partially taken away.
Fig. 2 is an exploded perspective view showing the liquid crystal display.
Fig. 3 is a sectional view showing a III - III position in Fig: 1.
Fig. 4 is a sectional view showing a IV - IV position in
Fig. 1.

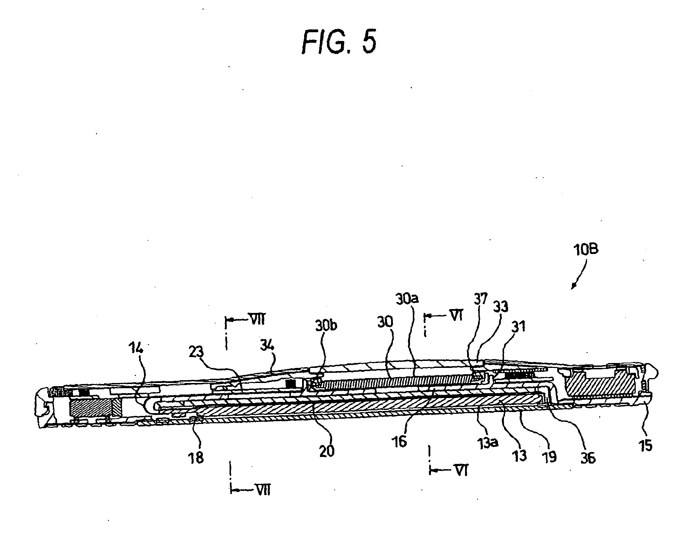

Fig. 5 is a sectional view showing a liquid crystal display according to a second example, which is cut away in a longitudinal direction.

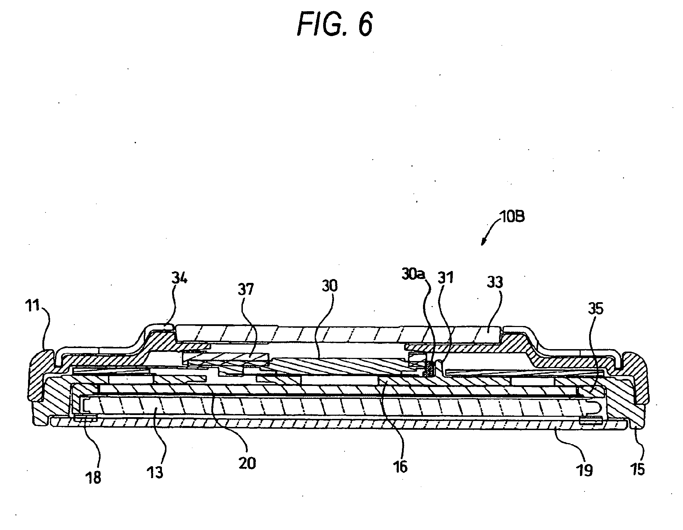

Fig. 6 is a sectional view showing a VI - VI position in Fig. 5.

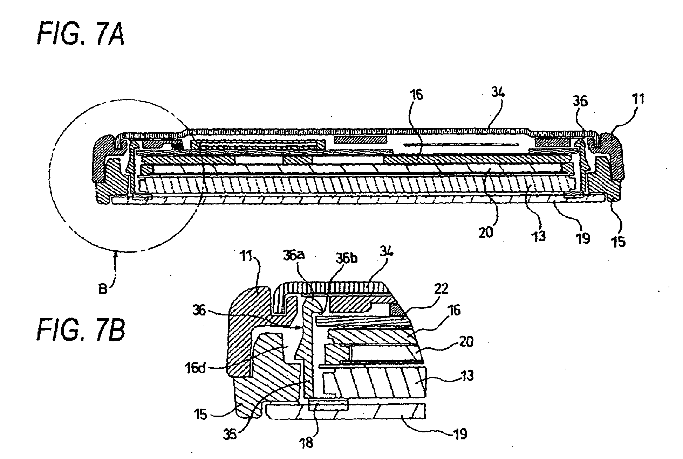

Fig. 7(A) is a sectional view showing a VII - VII position in Fig. 5 and Fig. 7(B) is an enlarged sectional view of B in (A).

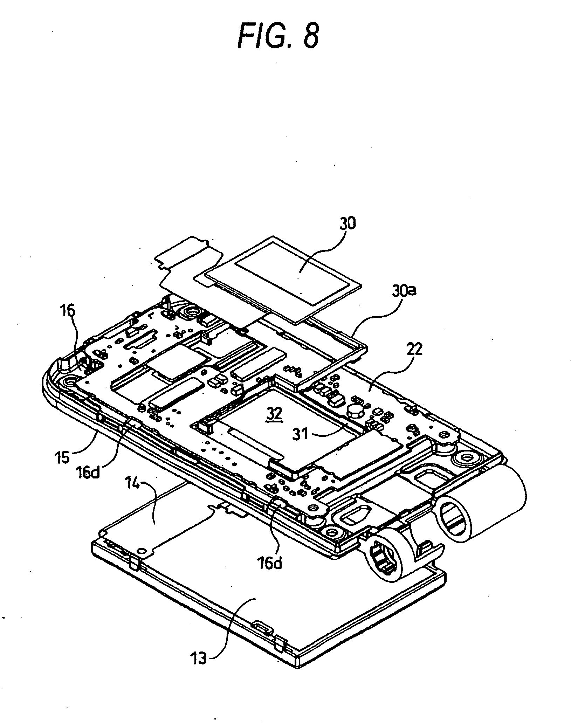

Fig. 8 is an exploded perspective view showing the liquid crystal display as seen from a back side.

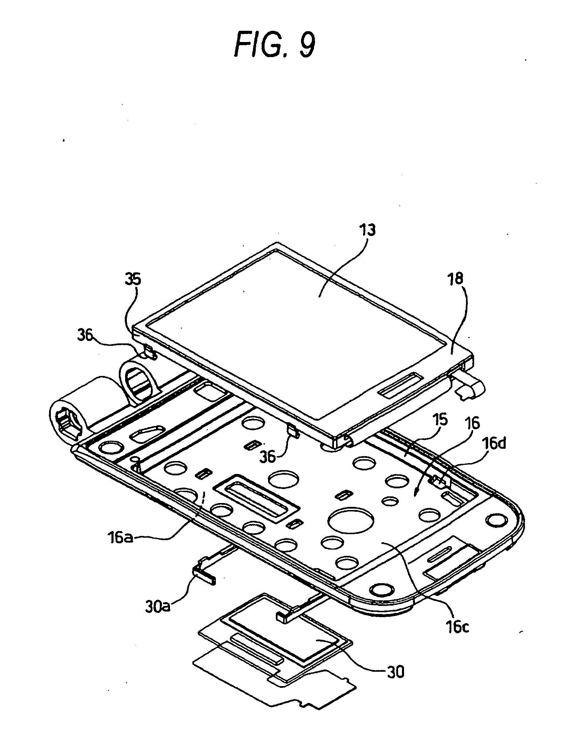

Fig. 9 is an exploded perspective view showing the liquid crystal display as seen from a surface side.

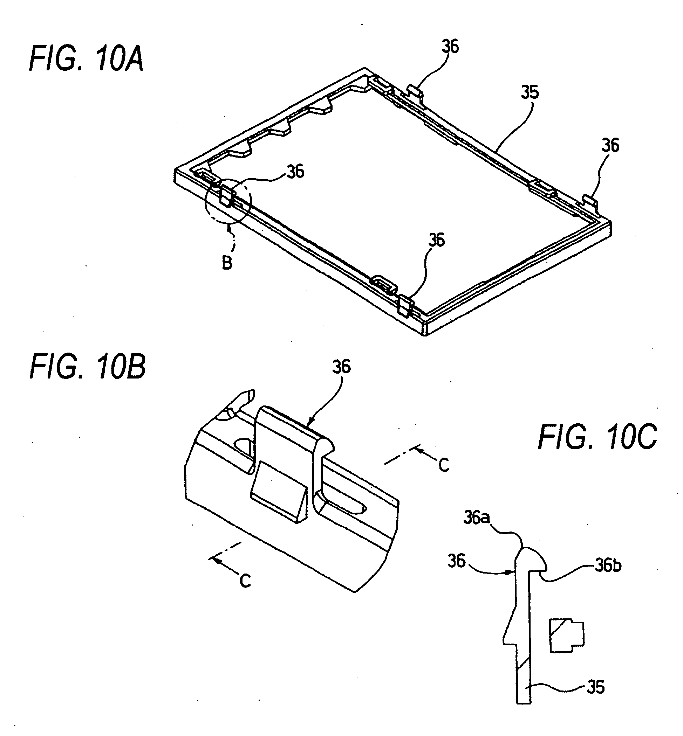

Fig. 10(A) is a perspective view showing a liquid crystal holder, Fig. 10(B) is an enlarged perspective view showing a B portion in (A), and Fig. 10(C) is a sectional view showing an engagement click.

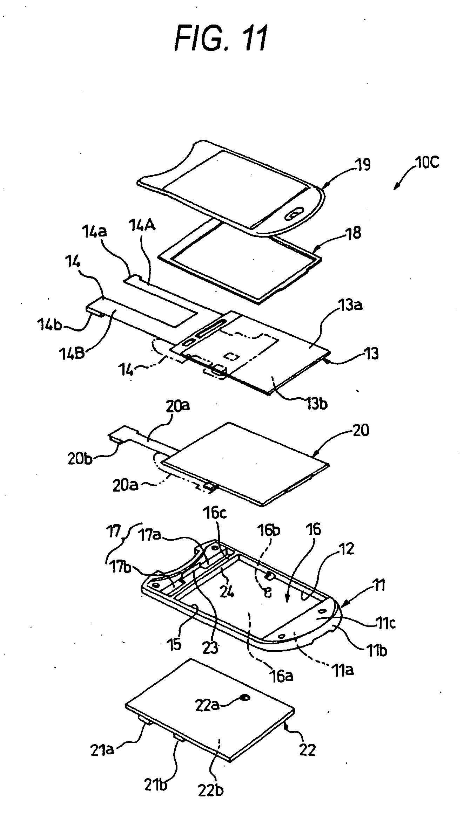

Fig. 11 is an exploded perspective view showing a liquid crystal display according to an embodiment of the invention.

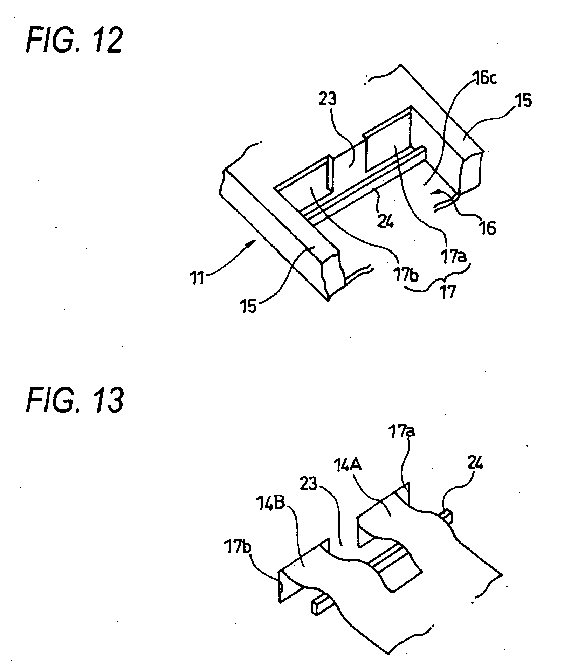

Fig. 12 is a perspective view showing a support column provided in an insertion hole and a rib provided in a plate portion.
Fig. 13 is a perspective view showing a state in which a flexible board is inserted in the insertion hole illustrated in Fig. 12.

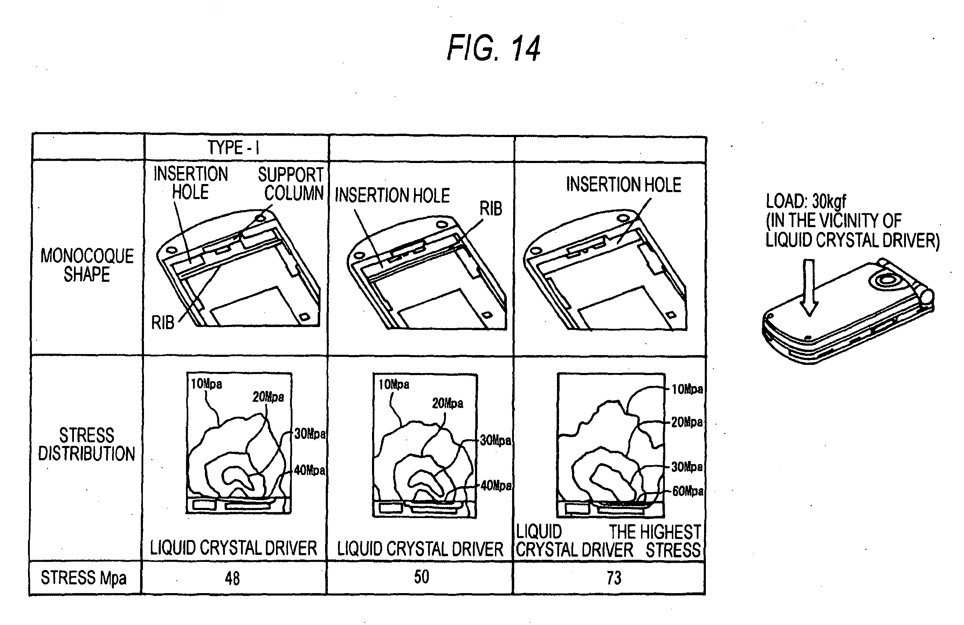

Fig. 14 is a table showing a loading test result of the liquid crystal display according to the embodiment of the invention.

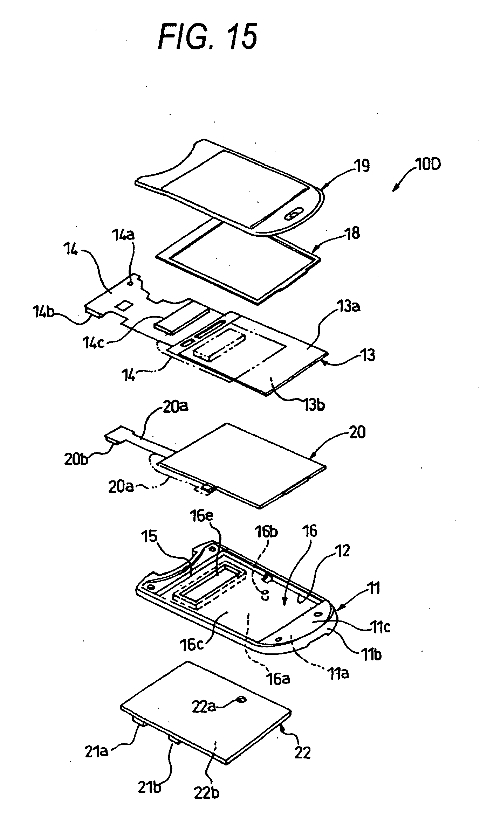

Fig. 15 is an exploded perspective view showing a liquid crystal display according to a third example.

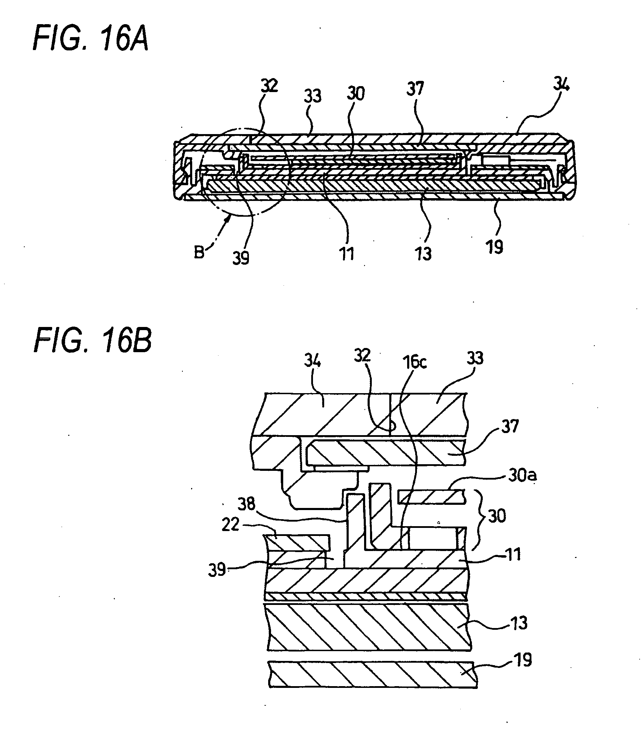

Fig. 16(A) is a sectional view showing a liquid crystal display according to a fourth example and Fig. 16(B) is an enlarged sectional view showing a B portion.

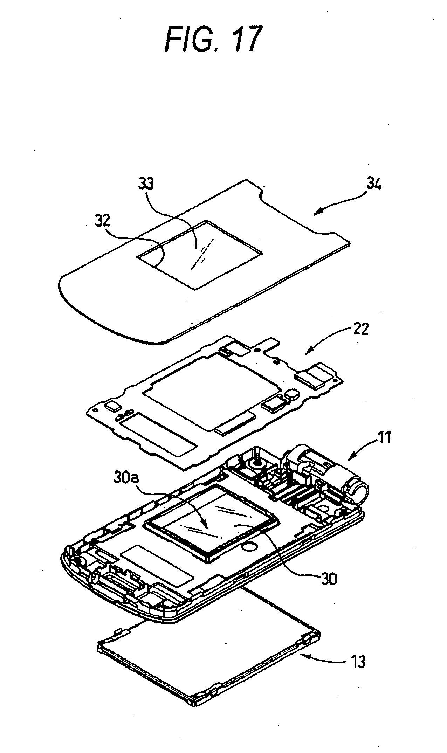

Fig. 17 is an exploded perspective view showing the liquid crystal display according to the fourth example.

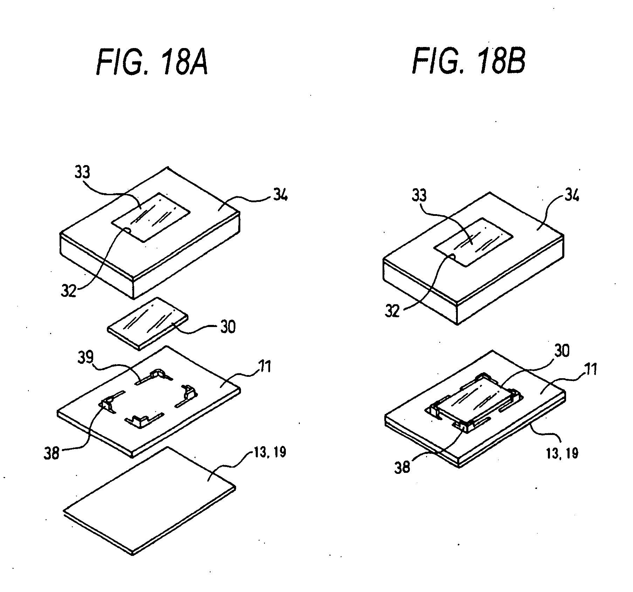

Fig. 18(A) is an exploded perspective view showing a structure of a main part of the liquid crystal display according to the fourth example and Fig. 18(B) is an exploded perspective view showing a state in which a part is assembled.

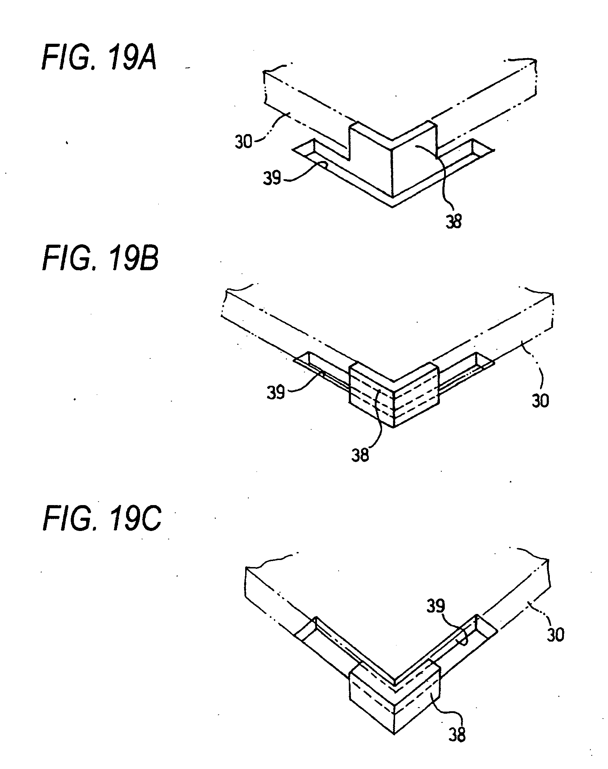

Fig. 19(A) is an explanatory view showing a projection and a slit in the liquid crystal display according to the fourth example, Fig. 19(B) is an explanatory view showing a variant of a disposition of the projection and the slit, and Fig. 19(C) is an explanatory view showing a positional relationship between the projection and the slit in (B).

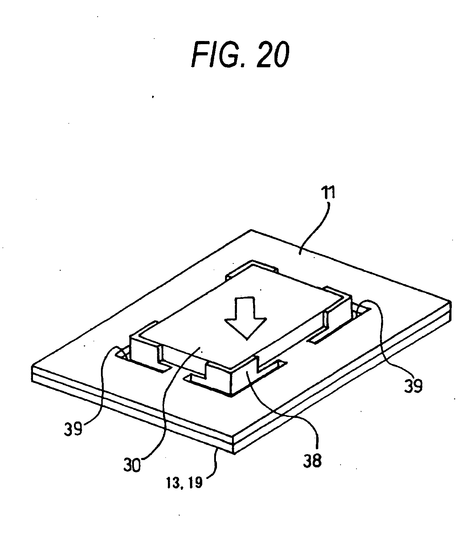

Fig. 20 is an explanatory view showing a direction of an external force acting on the liquid crystal display according to the fourth example.

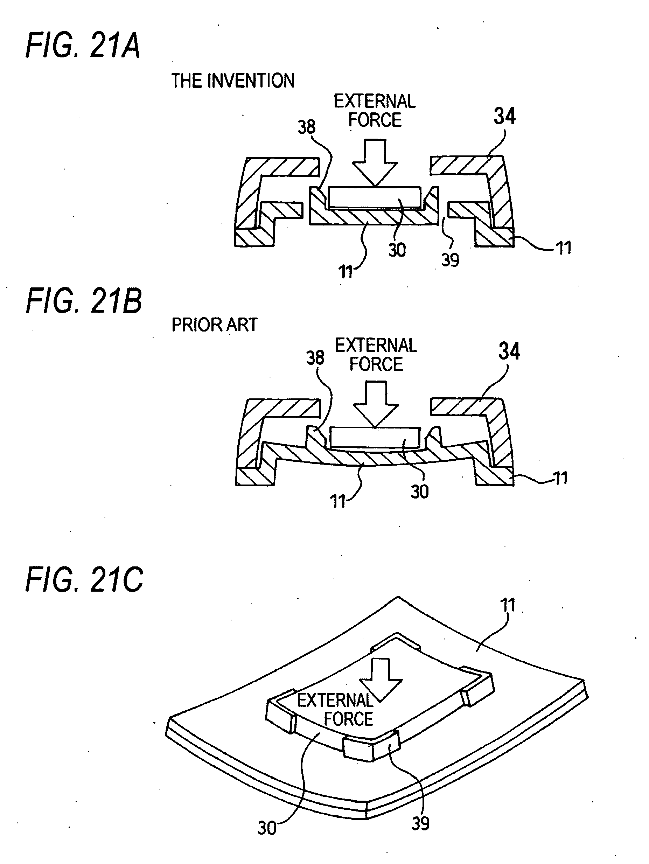

Fig. 21(A) is an explanatory view showing an action of the liquid crystal display according to the fourth example , Fig. 21(B) is an explanatory view showing a deforming state brought when the external force acts on the liquid crystal display having no slit, and Fig. 21(C) is a perspective view showing the deforming state of the liquid crystal display illustrated in (B).

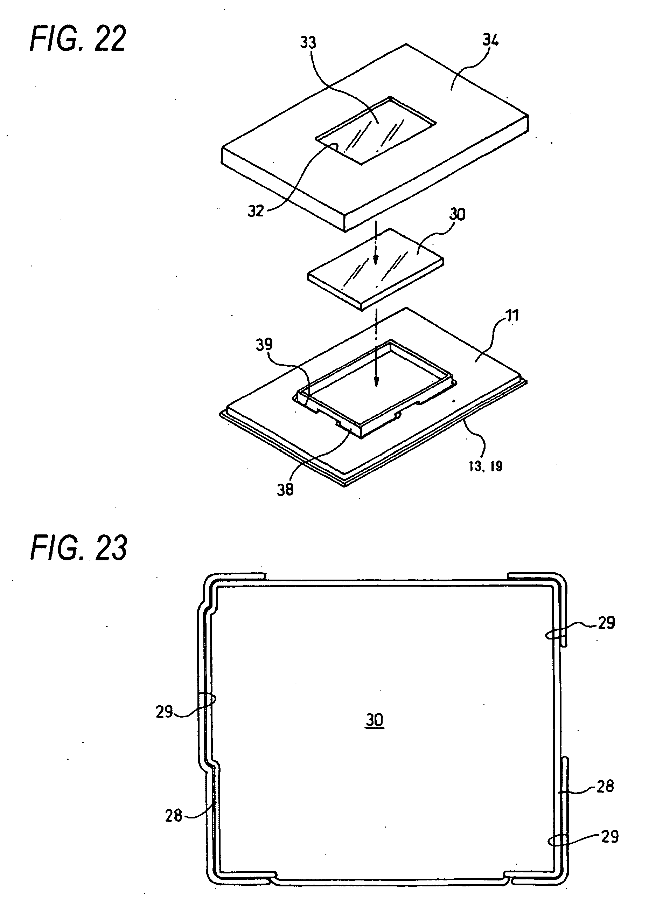

Fig. 22 is an exploded perspective view showing a variant of the liquid crystal display according to the fourth example.
Fig. 23 is an exploded perspective view showing another variant of the liquid crystal display according to the fourth example.

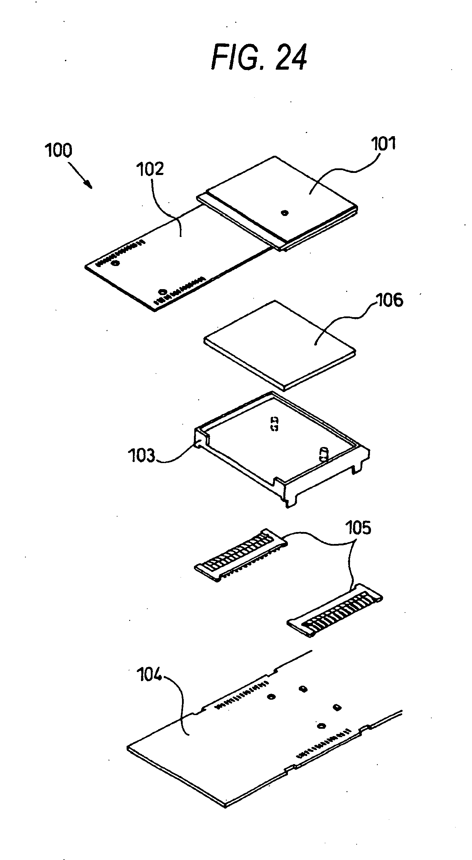

Fig. 24 is an exploded perspective view showing a conventional liquid crystal display.

### <EXPLANATION OF DESIGNATION>

- 10: liquid crystal display
- 11: housing
- 11a: back side
- 12: opening
- 13: liquid crystal body
- 14: flexible board
- 14a: positioning hole
- 14c: connector
- 15: wall portion
- 16: plate portion
- 16a: back face
- 16b: positioning boss
- 16e: opening for connector
- 17: insertion hole
- 22: printed board
- 23: support column
- 24: rib
- 30: sub liquid crystal body (sub liquid crystal)
- 30a: display surface
- 31: sub wall portion
- 32: sub opening
- 33, 37: transparent panel
- 34: case (protecting cover)
- 35: liquid crystal holder
- 36: engagement click
- 38: projection
- 39: slit

### <BEST MODE FOR CARRYING OUT THE INVENTION>

A liquid crystal display according to different examples and one embodiment will be described below with reference to the drawings.

One points out expressly that the liquid crystal display of a first, a second, a third and a fourth example is not claimed. The description of said examples helps to understand the embodiment of the present invention as described in combination with Figs. 11 to 14.

### (First Example)

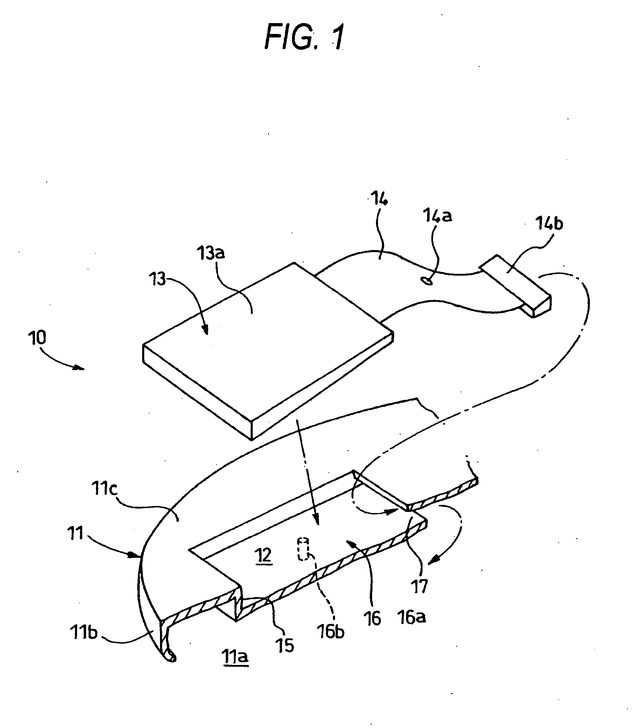

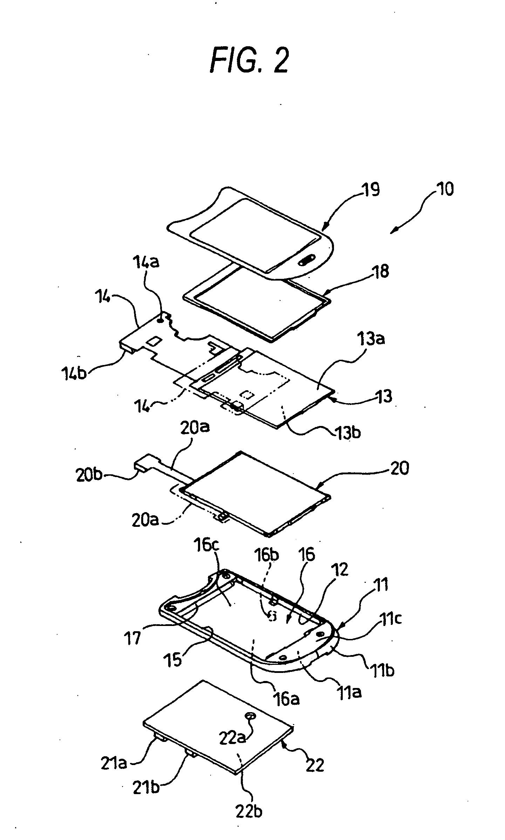

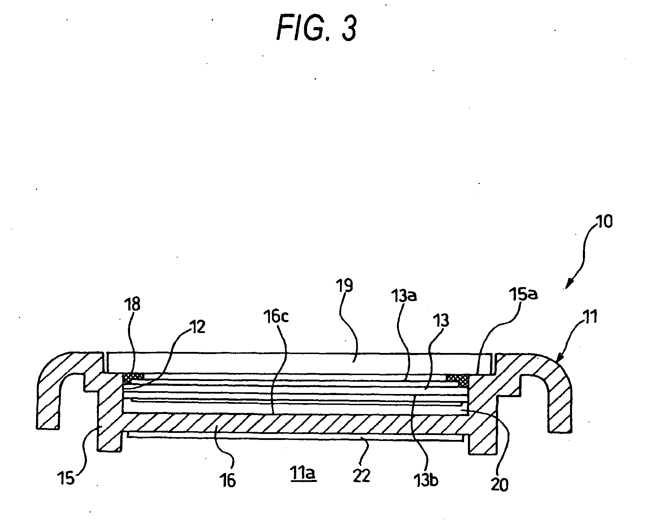

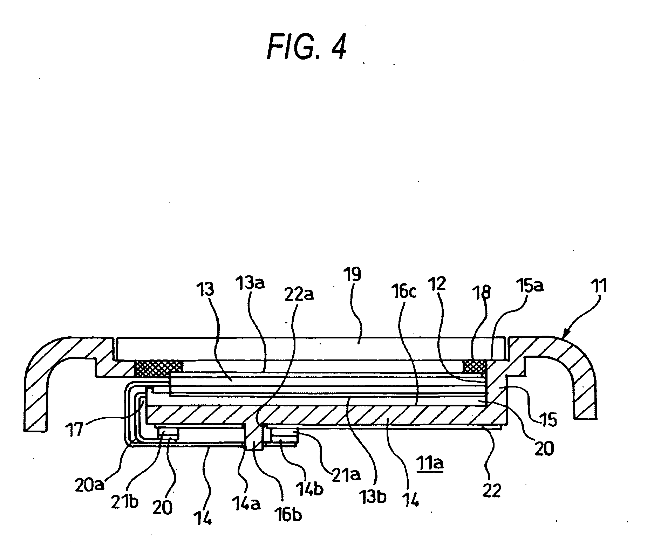

Fig. 1 is a perspective view showing a main part of a liquid crystal display according to a first example, which is partially taken away, Fig. 2 is an exploded perspective view showing the liquid crystal display, Fig. 3 is a sectional view showing a III - III position in Fig. 1, and Fig. 4 is a sectional view showing a IV - IV position in Fig. 1.

As shown in Fig. 1, a liquid crystal display 10 comprises a housing 11, an almost plate-shaped liquid crystal body 13 constituting a liquid crystal display panel which is disposed on a back side 11a of the housing 11 so as to be exposed from an opening 12 provided on the housing 11, and a flexible board 14 pulled out of an end face of the liquid crystal body 13. Moreover, a plate portion 16 is provided in parallel with the opening 12 through a wall portion 15 on the back side 11a of the housing 11 and can mount the liquid crystal body 13 thereon, and an insertion hole 17 capable of inserting the flexible board 14 therethrough is provided on the wall portion 15. A positioning hole 14a is provided in a predetermined position of the flexible board 14, and a positioning boss 16b corresponding to the positioning hole 14a is provided on a back face 16a of the plate portion 16.

Description will be given in more detail with reference to Figs. 2 to 4.

For example, the housing 11 such as a portable terminal has one of ends including a curved portion 11b which is curved like a circular arc and takes a shape of an almost rectangular frame, and has the opening 12 in a central part. The wall portion 15 is provided in a vertical direction on an outer periphery of the opening 12, and the wall portion 15 is cut away on one of sides at an opposite side of the curved portion 11b so that the insertion hole 17 is formed. Moreover, the rectangular plate portion 16 is provided in parallel with the opening 12 in the vicinity of a lower end of the wall portion 15, and one of sides is linked to the insertion hole 17. The positioning buss 16b is protruded from the back face 16a of the plate portion 16. Moreover, an upper end face 15a of the wall portion 15 is positioned on an inside by one step from an upper surface 11c of the housing 11, and a transparent panel 19 can be attached onto the upper end face 15a (an outside).

A light guide plate 20 taking a whole rectangular shape for uniformly guiding a light from a light emitting unit which is not shown to a whole surface of the opening is attached to the opening 12 on an upper side of the plate portion 16 in the housing 11, and the liquid crystal body 13 is attached onto the light guide plate 20. A wiring 20a for the light guide plate is connected to one of sides of the light guide plate 20, and a connector 20b is attached to a tip thereof. The liquid crystal body 13 is a thin plate-shaped member taking a whole rectangular shape, and has one of sides to which the flexible board 14 is attached, and a connector 14b to be coupled to the other electric component is attached to a tip of the flexible board 14. The transparent panel 19 is attached to a display surface 13a side of the liquid crystal body 13 through a frame-shaped cushion member 18 corresponding to an outer peripheral shape of the display surface 13a, and the display surface 13a is thus protected.

Moreover, a printed board 22 having connectors 21a and 21b mounted thereon is attached to the back side 11a of the housing 11 with a couple-face tape which is not shown. The printed board 22 is provided with a through hole 22a in a position corresponding to the positioning boss 16b disposed on the back face 16a of the plate portion 16 in the housing 11, and the positioning boss 16b penetrates the through hole 22a and is thus protruded from a back side (a lower side in Fig. 4) of the printed board 22.

Accordingly, the wiring 20a for the light guide plate which is pulled out of the through hole 17 is folded back toward a back side 22b side of the printed board 22 in order to enclose the printed board 22, and the connector 20b provided on the tip is connected to the connector 21b of the printed board 22. Moreover, the flexible board 14 of the liquid crystal body 13 is also pulled out of the insertion hole 17 and is folded back toward the back face 22b side of the printed board 22 in order to enclose the printed board 22, and is positioned with the positioning hole 14a fitted in the positioning boss 16b, and furthermore, the connector 14b provided on the tip is connected to the connector 21a of the printed board 22.

Next, description will be given to a process for assembling the liquid crystal display 10 having the structure described above.

First of all, the through hole 22a provided on the printed board 22 is fitted in the positioning boss 16b provided on the back face 16a of the plate portion 16 in the housing 11 to position the printed board 22 into a predetermined position, and furthermore, to bond the printed board 22 with a couple-face tape, for example.

Then, the wiring 20a for the light guide plate attached to the light guide plate 20 is inserted through the insertion hole 17 from a tip and is thus pulled out of the housing 11, and furthermore, the light guide plate 20 is attached into a predetermined position of an upper surface 16c of the plate portion 16, and the wiring 20a for the light guide plate which is pulled out of the insertion hole 17 is folded back to enclose the printed board 22 attached to the back face 16a of the plate portion 16, thereby connecting the connector 20b to the connector 21b.

Subsequently, the connector 14b provided on the tip of the flexible board 14 is inserted through the insertion hole 17 and is thus pulled out of the housing 11, and the liquid crystal body 13 is attached to a predetermined position of the opening 12 and the flexible board 14 is folded back in order to enclose the printed board 22. Then, the positioning hole 14a of the flexible board 14 is fitted in the positioning boss 16b protruded from the printed board 22, thereby carrying out positioning and fixation and connecting the connector 14b to the connector 21a. Thereafter, the transparent panel 19 is attached to the upper surface of the liquid crystal body 13 through the cushion member 18.

According to the liquid crystal display 10, the plate portion 16 for supporting the liquid crystal body 13 in the attachment of the liquid crystal body 13 to the opening 12 of the housing 11 is provided on the back side of the housing 11 in parallel with the opening 12 through the wall portion 15. Therefore, it is not necessary to provide a holding member in the attachment of the liquid crystal body to the housing as in the conventional art. Consequently, it is possible to decrease the number of components, and furthermore, to reduce an attachment man-hour of the holding member.

Moreover, the flexible board 14 pulled out of the insertion hole 17 provided on the wall portion 15 of the housing 11 is folded back toward the back face 16a of the plate portion 16 and the positioning hole 14a of the flexible board 14 is fitted in the positioning boss 16b provided on the back face 16a of the plate portion 16 so that the flexible board 14 is positioned and fixed. Therefore, it is possible to prevent a runout of the flexible board 14 and to decrease a load acting on the attaching portion of the flexible board 14 and the connector 14b which is easily broken due to a concentration of the load.

### (Second Example)

Next, description will be given to a second example of a liquid crystal display. Common portions to the first example have the same reference numerals and repetitive description will be omitted.

Fig. 5 is a sectional view showing the liquid crystal display according to the second example, which is cut away in a longitudinal direction, Fig. 6 is a sectional view showing a VI - VI position in Fig. 5, Fig. 7 is a sectional view showing a VII - VII position in Fig. 5, Fig. 8 is an exploded perspective view, Fig. 9 is an exploded perspective view, Fig. 10(A) is a perspective view showing a liquid crystal holder, Fig. 10(B) is an enlarged perspective view showing a B portion in Fig. 10(A), and Fig. 10(C) is a sectional view showing an engagement click.

As shown in Figs. 5 to 7, in a liquid crystal display 10B, a main liquid crystal body 13 is provided on a surface (a lower side in Fig. 5) 16c of a plate portion 16 disposed in the vicinity of a center in a vertical direction of a housing 11, and a display surface 13a of the liquid crystal body 13 is exposed from a surface of the housing 11. Moreover, a sub liquid crystal body 30 is provided on the side surface (a surface side) 16c of the plate portion 16 to which the liquid crystal body 13 is to be attached and a surface (back face) 16a on an opposite side (an upper side surface in Fig. 5), and a display surface 30a of the sub liquid crystal body 30 is exposed from a back face 11a of the housing 11 through a transparent panel 33 provided on an opening of an AL case 34. A cushion member 37 is provided between the transparent panel 33 and the sub liquid crystal body 30, and a shock applied from an outside can be prevented from being transmitted to the sub liquid crystal body 30.

More specifically, as shown in Figs. 8 and 9, a sub opening 32 is formed with a sub wall portion 31 provided integrally with the plate portion 16 in a portion corresponding to a region on an inside of a wall portion 15 for fitting the main liquid crystal body 13 which is disposed on the surface 16c on the back face 16a of the plate portion 16. The sub liquid crystal body 30 is attached to a sub liquid crystal holder 30b and is fitted in the sub opening 32, and the display surface is exposed from the back face 11a of the housing 11.

The wall portion 15 in which the liquid crystal body 13 is to be fitted is provided on the outer periphery of the side surface to which the main liquid crystal body 13 is attached in the plate portion 16 (the upper surface 16c in Fig. 9), and an opening 12 (see Fig. 1) is formed. The sub wall portion 31 taking a shape of a rectangular frame for fitting the sub liquid crystal body 30 is provided integrally with the plate portion 16 on the opposite side surface (the back face 16a) of the plate portion 16. In general, the sub liquid crystal body 30 has a smaller size than the main liquid crystal body 13. Therefore, the sub wall portion 31 for fitting the sub liquid crystal body 30 corresponds to the region on the inside of the wall portion 15 for fitting the main liquid crystal body 13.

By the structure, the liquid crystal body 13 is attached to the opening 12 on the surface side of the plate portion 16 in the housing 11, and furthermore, the sub liquid crystal body 30 is attached to the opposite side with the plate portion 16 interposed therebetween. Therefore, the plate portion 16 is shared so that the number of components can be decreased and a thickness of the housing 11 can be reduced.

Moreover, the sub liquid crystal body 30 generally has a smaller size than the main liquid crystal body 13 and the sub wall portion 31 for fitting the sub liquid crystal body 30 is provided corresponding to the region on the inside of the main wall portion 15 in the back face 16a of the plate portion 16 and thus functions as a rib for reinforcing the plate portion 16 from the back face 16a. Consequently, it is possible to increase the strength of the plate portion.

As shown in Figs. 8 to 10, moreover, the liquid crystal display 10B is provided with an engagement click 36 for engaging a printed board 22 through the plate portion 16 in a liquid crystal holder 35 for attaching the main liquid crystal body 30 to the opening 12.

As shown in Fig. 10(A), the engagement click 36 is protruded and provided integrally in a plurality of portions (for example, four portions) in the liquid crystal holder 35 taking the shape of the rectangular frame which serves to hold the main liquid crystal body 13. As shown in Figs. 10(B) and 10(C), a tip 36a of the engagement click 36 is sharpened like an arrowhead and a click 36b for engaging the printed board 22 is provided.

As shown in Fig. 9, accordingly, the engagement click 36 of the liquid crystal holder 35 holding the main liquid crystal body 13 is inserted and fitted to penetrate a through hole 16d from a surface side (an upper side in Fig. 9) to a back side (a lower side in Fig. 9) of the plate portion 16. On the other hand, the printed board 22 is provided on the back face 16a of the frame portion 16 and an edge of the printed board 22 is engaged and fixed with the click 36b of the engagement click 36 which penetrates the plate portion 16.

By the structure, it is possible to attach the liquid crystal body 13 and the printed board 22 to the plate portion 16 at the same time by using the liquid crystal holder 35 holding the main liquid crystal body 13. Therefore, it is possible to decrease the number of components. Moreover, it is not necessary to provide an engagement click for fixing the sub liquid crystal. Consequently, a notch for keeping away from a holder for fixing a sub liquid crystal does not need to be provided in the housing. Thus, it is possible to simplify a structure of a metal mold.

### (Embodiment)

Next, description will be given to an embodiment of the liquid crystal display in accordance with the invention. Common portions to the first or second examples have the same reference numerals and repetitive description will be omitted.

Fig. 11 is an exploded perspective view showing the liquid crystal display according to the embodiment of the invention, Fig. 12 is a perspective view showing a support column provided in an insertion hole and a rib provided in a plate portion, and Fig. 13 is a perspective view showing a state in which a flexible board is inserted in the insertion hole illustrated in Fig. 12.

As shown in Figs. 11 and 12, in a liquid crystal display 10C, a support column 23 for transversely partitioning an insertion hole 17 is provided. Accordingly, the insertion hole 17 is partitioned into two left and right portions 17a and 17b with the support column 23 set to be a boundary so that a span length is reduced. Consequently, it is possible to increase a strength of a housing 11 in the insertion hole 17 portion.

Correspondingly, a flexible board 14 to be inserted into the insertion holes 17a and 17b is also branched into two portions 14A and 14B.

Moreover, a rib 24 is provided along the insertion hole 17 on a side end of the insertion hole 17 in a plate portion 16. The rib 24 is a member taking a rectangular section, for example, and is protruded upward from an upper surface 16c of the plate portion 16 over an almost whole width of the upper surface 16c of the plate portion 16.

By such a structure, it is possible to maintain a strength on the side end of the insertion hole 17 in the plate portion 16 and to suppress a flexure. It is desirable that the rib 24 should be provided by an integral mold with the plate portion 16, and the rib 24 can also be provided on an upper surface of the plate portion 16 with an adhesive later.

As shown in Fig. 13, accordingly, the flexible board 14 has the branched flexible board 14A which is inserted into the insertion hole 17a beyond the rib 24, and furthermore, the flexible board 14B which is inserted in the insertion hole 17b.

Fig. 14 shows a stress distribution of a loading test carried out for the housing 11 in monocoque shapes of three types. In the diagram showing the stress distribution, a lower side corresponds to a stress distribution on the insertion hole 17 side and an upper side corresponds to a stress distribution on a hinge side. In the loading test, a load of 30 kgf was mounted in the vicinity of a liquid crystal driver in the housing 11 (see the stress distribution in Fig. 14) and the stress distribution was represented by a contour line and a numerical value.

For the housing 11 to be a target, moreover, a type - I is intended for the case in which the support column 23 is provided in the insertion hole 17 and the rib 24 is provided in the plate portion 16 as described in the third embodiment, a type - II is intended for the case in which only the rib 24 is provided in the plate portion 16, and a type - III is intended for the case in which the insertion hole 17 is provided and the support column 23 and the rib 24 are not provided as described in the first embodiment.

As a result of the test, it was found that the stress is the highest (73 Mpa) in the case of the type - III and is the smallest (48 Mpa) in the case of the type - I as shown in columns for the stress distribution and a stress. Moreover, the highest stress appears in a portion provided along the insertion hole 17 in the plate portion 16 of the type - III. In particular, a ceramic material is used for the liquid crystal driver. Therefore, it is desirable that a stress should not be applied to the vicinity of the liquid crystal driver. In the type - I and the type - II, the stress in the vicinity of the liquid crystal driver on a left side in Fig. 14 is reduced. Moreover, it is apparent that a range of the stress distribution is also reduced in the type - I and the type - II.

Consequently, it was found that the support column 23 and the rib 24 contribute to the strength of the housing 11. Moreover, the stress in case of the type - II in which the rib 24 is provided in a portion having the highest stress along the insertion hole 17 is close to the stress in case of the type - I in which the support column 23 and the rib 24 are provided. Consequently, it was found that the rib 24 greatly contributes to a maintenance of the strength and a reduction in a load applied to a liquid crystal body 13. From a difference in the stress distribution between the type - I and the type - II in which the presence of the support column 23 is varied, it was found that the support column 23 is provided, resulting in a reduction in the stress distribution in the vicinity of the liquid crystal driver on the left of the drawing.

### (Third Example)

Next, description will be given to a third example of a liquid crystal display. Common portions to the first to second examples and the embodiment have the same reference numerals and repetitive description will be omitted.

Fig. 15 is an exploded perspective view showing a liquid crystal display according to the third example.

As shown in Fig. 15, a liquid crystal display 10D comprises a housing 11, an almost plate-shaped liquid crystal body 13 which is disposed on a back side 11a of the housing 11 so as to be exposed from an opening 12 provided on the housing 11, and a flexible board 14 pulled out of an end face of the liquid crystal body 13.

Moreover, a plate portion 16 is provided in parallel with the opening 12 through a wall portion 15 on the back side 11a of the housing 11 and can mount the liquid crystal body 13 thereon, and the plate portion 16 is provided with an opening 16e for a connector in which a connector 14c disposed on the flexible board 14 is fitted when the flexible board 14 is folded back and the liquid crystal body 13 is thus mounted on the plate portion 16.

More specifically, the connector 14c provided on the same upper surface side of the flexible board 14 as a display surface 13a of the liquid crystal body 13 in Fig. 15 is protruded downward by folding back the flexible board 14. When the liquid crystal body 13 is accommodated into the housing 11 from above in this state, the connector 14c protruded downward is fitted in the opening 16e for a connector which is provided in the plate portion 16 of the housing 11 so that a connecting surface is exposed to a lower side. Therefore, it is possible to easily carry out a connection to a printed board 22 to be attached to the lower side of the housing 11.

### (Fourth example)

Next, description will be given to a fourth example of a liquid crystal display. Common portions to the first to third examples and the embodiment have the same reference numerals and repetitive description will be omitted.

As shown in Figs. 16 and 17, the liquid crystal display according to the example comprises a sub liquid crystal body 30, a housing 11 for mounting the sub liquid crystal body 30, a case 34 constituting a protecting cover for protecting the sub liquid crystal body 30, and a printed board 22 for mounting a control portion to drive the sub liquid crystal body 30 which is not shown.

The case 34 has a sub opening 32 sealed with a transparent panel 33 and can visually recognize a display surface 30a of the sub liquid crystal body 30 from an outside. The housing 11 is provided with a projection 38 for positioning and interposing the sub liquid crystal body 30 on a surface 16c (an upper surface in Fig. 16) mounting the sub liquid crystal body 30 thereon. Moreover, the housing 11 has a slit 39 formed along the projection 38 in a penetrating state.

In the example, the projection 38 positions and interposes four corners (angular corners) of the sub liquid crystal body 30. As shown in Fig. 18, therefore, the projection 38 is provided in four portions corresponding to the four corners of the sub liquid crystal body 30. More specifically, the projection 38 is disposed in a boundary portion of a mounting region of the sub liquid crystal body 30, that is, along an outer peripheral surface including the four corners (angular corners) of the sub liquid crystal body 30 shown in Fig. 19(A).

On the other hand, in the example, the slit 39 is formed to penetrate the housing 11 over a certain length along an outer peripheral surface including the four corners (angular corners) of the sub liquid crystal body 30 on an outside from an external surface of the projection 38 as shown in Fig. 19(A). In addition, for example, it is also possible to employ a structure in which the slit 39 is formed over a certain length in parallel with the outer peripheral surface of the sub liquid crystal body 30 on an inside of an internal surface of the projection 38 shown in Fig. 19(B) (or in an identical position to that shown in Fig. 19(C)).

According to the example, therefore, in the case in which the sub liquid crystal body 30 is strongly pressed by accident or collides with something so that an excessive external force acts on the display surface 30a of the transparent panel 33 as shown in Fig. 20, there is caused a displacement to move downward a sub liquid crystal body 30 mounting region of the housing 11 which is surrounded by the projection 38 facing the slit 39 with respect to the housing 11 portion on the outside, and an impact force is thus absorbed (or lessened) effectively as shown in Fig. 21(A). Consequently, a cover glass provided on the surface of the liquid crystal body can be prevented from being broken.

While the projection 38 is formed on only the four corners of the sub liquid crystal body 30 in the example, it is also possible to employ a structure in which the projection 38 is erected over the whole outer periphery of the sub liquid crystal body 30 as shown in Fig. 22, for example. Referring to a region in which the slit 39 is formed, moreover, it is also possible to employ a structure in which the slit 39 is formed over a certain length in the outer peripheral direction of the sub liquid crystal body 30 in each of three surfaces provided across corners in two portions on the outer peripheral surface of the sub liquid crystal body 30 (a left side surface in Fig. 23) and corners in two residual portions (a right side surface in Fig. 23) as shown in Fig. 23, for example, in addition to the embodiment in which the slit 39 is formed over a certain length along the four corners of the sub liquid crystal body 30. While there is employed the structure in which the projection 38 and the slit 39 are provided in relation to a mounting region on the sub liquid crystal body 30 side in the example, moreover, the projection and the slit may be provided in the mounting region of a (main) liquid crystal body 13 or the projection and the slit may be provided in both of the mounting regions of the (main) liquid crystal body 13 and the sub liquid crystal body 30.

Next, the inventor carried out an experiment for applying an impact (an external force) from an outside for the liquid crystal display which is provided with the slit 39 according to the example shown in Fig. 21(A) and the conventional liquid crystal display which is not provided with the slit as shown in Figs. 21(B) and 21(C). Liquid crystal bodies to be installed in these liquid crystal displays had vertical and horizontal lengths of 800mm, respectively.

As a result, it was confirmed that the liquid crystal body is not broken by an external force of 30 kgf in the liquid crystal display provided with the slit 39 according to the example and is broken by an application of an external force of 18 kgf in the liquid crystal display which is not provided with the slit.

The liquid crystal display according to the invention is not restricted to the embodiment.

While the invention has been described in detail with reference to the specific embodiment, it is apparent to the skilled in the art that various changes and modifications can be made without departing from the scope of the appended claims.

### <INDUSTRIAL APPLICABILITY>

As described above, in the liquid crystal display according to the invention, the plate portion is provided in parallel with the opening through the wall portion on the back side of the housing, and furthermore, the wall portion is provided with the insertion hole for pulling out the flexible board drawn from the end face of the liquid crystal body. Consequently, it is possible to obtain an advantage that the number of components can be decreased and an attachment man-hour of the holding member can be reduced. For example, the liquid crystal display is useful for a liquid crystal display which can be utilized in a portable terminal.

## Claims

1. A liquid crystal display (10C), having
a housing (11) providing an open void (12) in a central part thereof, the housing (11) comprising a wall portion (15) provided in a vertical direction and defining the outer lateral periphery of the open void (12),
a plate-shaped liquid crystal display panel (13) arranged to be received by said open void (12), and
a flexible board (14) attached to an end face of the liquid crystal display panel (13),
wherein the housing (11) further comprises a plate portion (16) provided in parallel with and defining the bottom end of the open void (12), the plate portion (15) adjoning the lower end of the wall portion (15) and relating to the back side (11a) of the housing (11), the liquid crystal display panel (13) being arranged to be mounted on the plate portion (16), and
wherein the wall portion (15) is provided with an insertion hole (17) allowing the flexible board (14) to pass therethrough,
**characterizing in that**
the liquid crystal display further comprises a support column (23) transversely partitioning the insertion hole (17).

2. The liquid crystal display according to claim 1, **characterized in that** a rib (24) is provided along the insertion hole(17) on a side end of the plate portion (16).

3. The liquid crystal display according to claim 1 or 2, **characterized in that** a positioning boss (16b) corresponding to a positioning hole (22a) disposed on a printed board (22) is provided on the back face (16a) of the plate portion (16).

## Patentansprüche

1. Flüssigkristallanzeige (10C), aufweisend:
ein Gehäuse (11), das einen offenen Leerraum (12) in einem mittleren Teil hiervon bereitstellt, wobei das Gehäuse (11) einen Abschnitt (15) umfasst, der in einer vertikalen Richtung vorgesehen ist und den äußeren Seitenumfang des offenen Leerraumes (12) festlegt,
ein plattenförmiges Flüssigkristallanzeigefeld (13), das derart angeordnet ist, dass es von dem offenen Leerraum (12) aufgenommen wird, und
eine flexible Platte (14), die an einer Endfläche des Flüssigkristallanzeigefeldes (13) angebracht ist,
wobei das Gehäuse (11) des Weiteren einen Plattenabschnitt (16) aufweist, der parallel zu dem offenen Leerraum (12) vorgesehen ist und das Bodenende hiervon festlegt,
wobei der Plattenabschnitt (16) an das untere Ende des Wandabschnittes (15) angrenzt und mit der Hinterseite (11a) des Gehäuses (11) zusammenhängt, wobei das Flüssigkristallanzeigefeld (13) derart angeordnet ist, dass es an dem Plattenabschnitt (16) montiert ist,
wobei der Wandabschnitt (15) mit einem Einführloch (17) versehen ist, durch das die flexible Platte (14) hindurchgehen kann,
**dadurch gekennzeichnet, dass**
die Flüssigkristallanzeige des Weiteren eine Stützsäule (23) aufweist, die das Einführloch (17) querläufig unterteilt.

2. Flüssigkristallanzeige nach Anspruch 1, **dadurch gekennzeichnet, dass** eine Rippe (24) entlang des Einführloches (17) an einem Seitenende des Plattenabschnittes (16) vorgesehen ist.

3. Flüssigkristallanzeige nach Anspruch 1 oder 2, **dadurch gekennzeichnet, dass** eine Positioniererhebung (16b) entsprechend einem Positionierloch (22a) mit Anordnung an einer Leiterplatte (22) an der Hinterfläche (16a) des Plattenabschnittes (16) vorgesehen ist.

## Revendications

1. Dispositif d'affichage à cristaux liquides (10c), comprenant
un boîtier (11) comportant un vide ouvert (12) dans une partie centrale de celui-ci, le boîtier (11) comprenant une partie de paroi (15) disposée dans une direction verticale et définissant la périphérie latérale extérieure du vide ouvert (12),
un panneau d'affichage à cristaux liquides en forme de plaque (13) agencé de manière à être reçu par ledit vide ouvert (12), et
une carte souple (14) fixée à une face d'extrémité du panneau d'affichage à cristaux liquides (13),
dans lequel le boîtier (11) comprend en outre une partie de plaque (16) disposée en parallèle avec le vide ouvert (12) et définissant l'extrémité inférieure de celui-ci, la partie de plaque (16) étant attenante à l'extrémité inférieure de la partie de paroi (15) et associée à la face arrière (11a) du boîtier (11), le panneau d'affichage à cristaux liquides (13) étant agencé de manière à être monté sur la partie de plaque (16), et
dans lequel la partie de paroi (15) est munie d'un trou d'insertion (17) permettant à la carte souple (14) de la traverser,
**caractérisé en ce que**
le dispositif d'affichage à cristaux liquides comprend en outre une colonne support (23) partageant transversalement le trou d'insertion (17).

2. Dispositif d'affichage à cristaux liquides selon la revendication 1, **caractérisé en ce qu'**une nervure (24) est prévue le long du trou d'insertion (17) sur une extrémité latérale de la partie de plaque (16).

3. Dispositif d'affichage à cristaux liquides selon la revendication 1 ou 2, **caractérisé en ce qu'**un embossage de positionnement (16b) correspondant à un trou de positionnement (22a) disposé sur une carte imprimée (22) est prévu sur la face arrière (16a) de la partie de plaque (16).
